# EUROPÄISCHE PATENTSCHRIFT

(11) **EP 3 133 195 B1**
(45) Veröffentlichungstag und Bekanntmachung des Hinweises auf die Patenterteilung: **26.12.2018**
(21) Anmeldenummer: 15181578.4
(22) Anmeldetag: 19.08.2015
(51) Int. Cl.: D04B 27/14

(54) **FADENSPANNEINRICHTUNG**
YARN-TENSIONING DEVICE
DISPOSITIF DE TENSION DE FIL

(43) Veröffentlichungstag der Anmeldung: 22.02.2017
(73) Patentinhaber: Karl Mayer Textilmaschinenfabrik GmbH, 63179 Obertshausen (DE)
(72) Erfinder: Dr. Grundmann, Tim, 63303 Dreieich (DE); Kollmannthaler, Meike, 52064 Aachen (DE); Schorlemmer, Martin, 63110 Rodgau (DE)
(74) Vertreter: Keil & Schaafhausen Patent- und Rechtsanwälte PartGmbB

(56) Entgegenhaltungen:
- EP-A1- 0 139 805
- EP-A1- 2 565 310
- DE-A1- 19 938 872
- DE-C- 813 874
- DE-C- 909 522
- GB-A- 1 088 848
- US-A- 2 811 027
- US-A- 6 056 112
- H. Mertens ET AL: "G2 - Federnde Verbindungen (Federn)" In: "Dubbel : Taschenbuch für den Maschinenbau", 1. Januar 2014 (2014-01-01), Springer, Berlin, XP055236542, ISBN: 978-3-642-38890-3 Seiten G51-G64, * Seite G61; Tabelle 6 *

## Beschreibung

Die Erfindung betrifft eine Fadenspanneinrichtung umfassend ein Federelement und einen Hebel.

In Kettenwirkmaschinen wird eine Fadenschar von Kettbäumen abgezogen und den Wirkwerkzeugen zugeführt. Zwischen den Kettbäumen und den Wirkwerkzeugen wird üblicherweise eine Fadenspanneinrichtung angeordnet.

Eine Kettenwirkmaschine mit einer Fadenspanneinrichtung der eingangs genannten Art ist beispielsweise aus DE 20 2008 005 619 U1 bekannt.

Aus EP 2 565 310 A1 ist eine Kettenwirkmaschine mit einer Fadenspannungsausgleichseinrichtung bekannt. Die Fadenspannungsausgleichseinrichtung umfasst ein Rohr, das über Enden von mehreren Schraubenfedern an einer maschinenfesten Halterung befestigt ist.

Aus US 2 811 027 A ist eine weitere Fadenspanneinrichtung für eine Kettenwirkmaschine bekannt. Die Fadenspanneinrichtung umfasst ebenfalls Schraubenfedern die an einem Ende mit einem Fadenführungsstab verbunden sind.

DE 813 874 C zeigt eine Garnspann- und Bremsvorrichtung umfassend eine Torsionsfeder.

In EP 0 139 805 A1 wird eine Frottierstoffwebmaschine umfassend Blattfedern oder Schraubenfedern zur Steuerung der Florkettspannung offenbart.

GB 1 088 848 A beschreibt eine verklebte Gummitorsionsfedereinheit, die für Schwenkarme für Spindeln von Spinnmaschinen oder dergleichen verwendet werden kann.

Die Aufgabe der Fadenspanneinrichtung liegt darin, die Fadenspannungsunterschiede, welche durch die Wirkbewegung und andere Einflüsse entstehen, auszugleichen. Die Fadenspanneinrichtung wird dabei üblicherweise so positioniert, dass die Fadenschar an ihr umgelenkt wird und zumindest teilweise aufliegt.

Außerdem können die Schwingungen der Fadenschar durch die Fadenspanneinrichtung zumindest teilweise gedämpft werden.

Die bekannten Fadenspanneinrichtungen verwenden Blattfedern aus Stahl, die eine gute Stabilität und Federwirkung ermöglichen. Nachteilig ist jedoch, dass die Eigenfrequenz der Fadenspanneinrichtung durch das resultierende recht hohe Trägheitsmoment der Federn begrenzt wird. Die erreichbare Arbeitsgeschwindigkeit der Kettenwirkmaschine kann dabei mittlerweile durch die Eigenfrequenz der Fadenspanneinrichtung limitiert sein.

Aufgabe der vorliegenden Erfindung ist es daher, eine Fadenspanneinrichtung mit einer möglichst hohen Eigenfrequenz und gleichzeitig einer möglichst starken Dämpfung bereitzustellen.

Erfindungsgemäß wird die oben genannte Aufgabe dadurch gelöst, dass das Federelement eine Drehschubfeder umfasst, die mit einem Ende des Hebels verbunden ist, wobei der Hebel ein Hohlprofil aufweist und/oder aus faserverstärktem Kunststoff besteht.

Drehschubfedern finden gewöhnlich im Automobilbereich Verwendung als Torsionsfedern mit hoher Dämpfung. Erfindungsgemäß wird nun also statt einer Blattfeder eine Drehschubfeder verwendet. Die resultierende Fadenspanneinrichtung kann dadurch eine deutlich höhere Eigenfrequenz aufweisen, da die Hauptmasse der Feder nah an der Drehachse angeordnet ist. Der Hebel muss dann nicht mehr die Federwirkung mit bereitstellen, wie dies im Stand der Technik der Fall war, und kann daher aus einem möglichst leichten Material bestehen, um ein möglichst geringes Trägheitsmoment zu erzielen. Der Hebel kann dann an einem Ende senkrecht zur Drehachse der Drehschubfeder an der Drehschubfeder befestigt sein. Am anderen Ende des Hebels kann ein Anschlussstück angeordnet werden. An dem Anschlussstück kann ein Umlenkprofil befestigt sein, an dem die Fadenschar anliegen und umgelenkt werden kann. Die Drehschubfeder kann dann dem Hebel erlauben sich zu neigen, um eine Änderung der Fadenspannung auszugleichen. Insgesamt ergibt sich so eine Fadenspanneinrichtung mit einer höheren erzielbaren Eigenfrequenz als im Stand der Technik. Außerdem ist es leicht möglich, eine starke Schwingungsdämpfung bereitzustellen, was sich bei der bisherigen Verwendung von Blattfedern schwierig gestaltete.

Durch die Verwendung eines Hohlprofils lässt sich das Gewicht des Hebels weiter verringern, um das Trägheitsmoment und damit die Eigenfrequenz der Fadenspanneinrichtung weiter zu senken.

Die Verwendung von faserverstärktem Kunststoff für den Hebel erlaubt ein möglichst geringes Trägheitsmoment der Fadenspanneinrichtung bei gleichzeitiger hoher Stabilität. Es ist besonders bevorzugt, wenn der Hebel aus karbonfaserverstärktem Kunststoff besteht.

Es ist von Vorteil, wenn die Drehschubfeder einen elastomeren Körper umfasst. Der elastomere Körper hat vorzugsweise die Form eines Zylinders oder einer Zylinderhülse.

Vorzugsweise ist der Hebel an einem Ende mit dem elastomeren Körper verbunden. Es kann also beispielsweise ein Ende des Hebels innerhalb des elastomeren Körpers angeordnet sein. Wenn der elastomere Körper als Zylinder ausgebildet ist, ist es von Vorteil, wenn der Hebel über mehr als den halben Durchmesser des Zylinders radial innerhalb des elastomeren Körpers angeordnet ist. Dies erlaubt eine möglichst stabile Verbindung zwischen Hebel und elastomeren Körper. Der Hebel verläuft hier vorzugsweise senkrecht zur Drehachse der Drehschubfeder.

Es ist von Vorteil, wenn der Hebel am anderen Ende mit einem Anschlussstück verbunden ist. Das Anschlussstück kann vorzugsweise auch aus Kunststoff ausgebildet sein. Das Anschlussstück kann je nach Ausführungsform selbst zum Umlenken der Fadenschar dienen oder lediglich zum Anschluss eines Umlenkteils wie beispielsweise eines Umlenkprofils dienen.

In einer bevorzugten Ausführungsform ist die Drehschubfeder eine Drehschub-Scheibenfeder. Eine Drehschub-Scheibenfeder erlaubt eine besonders einfache Konstruktion.

Vorzugsweise weist die Drehschubfeder einen zylindrischen elastomeren Körper auf, der an beiden Stirnseiten mit je einer Federhalterung verbunden ist. Die Federhalterungen können hier also gemeinsam mit den Scheiben der Drehschub-Scheibenfeder ausgebildet sein. Damit ergibt sich eine besonders einfache und kostengünstige Konstruktion der Fadenspanneinrichtung.

In einer weiteren bevorzugten Ausführungsform ist die Drehschubfeder eine Drehschub-Hülsenfeder. Eine Drehschub-Hülsenfeder weist gegenüber einer Drehschub-Scheibenfeder eine höhere Stabilität auf.

Vorzugsweise umfasst die Drehschubfeder einen Kern und eine zylindrische Außenhülse. Der Kern und die Außenhülse können hierbei aus faserverstärktem Kunststoff oder Metall bestehen. Der Kern kann als zylindrische Innenhülse oder als Stab ausgebildet sein.

Vorzugsweise ist zwischen Kern und Außenhülse ein elastomerer Körper angeordnet, wobei der elastomere Körper die Form einer Zylinderhülse aufweist.

Es ist weiterhin von Vorteil, wenn der Hebel an einem Ende mit der Außenhülse verbunden ist. Der Hebel kann aber auch sowohl mit der Außenhülse als auch mit einem zwischen dem Kern und der Außenhülse angeordneten elastomeren Körper verbunden sein.

Vorzugsweise ist der Kern an beiden Enden mit je einer Federhalterung verbunden. Der Kern ist dann über die Federhalterungen drehfest gelagert und die Außenhülse ist gemeinsam mit dem Hebel gegenüber dem Kern verdrehbar gelagert.

Die Erfindung betrifft weiterhin eine Kettenwirkmaschine umfassend eine Fadenspanneinrichtung nach einem der vorherigen Ausführungsbeispiele.

Die Erfindung wird im Folgenden anhand von bevorzugten Ausführungsbeispielen in Verbindung mit der Zeichnung beschrieben. Hierin zeigen:
- Fig. 1: eine erste Ausführungsform einer erfindungsgemäßen Fadenspanneinrichtung mit einer Drehschub-Scheibenfeder in Ansicht von oben,
- Fig. 2: eine Schnittansicht der Ausführungsform nach Fig. 1 entlang der Schnittlinie A-A,
- Fig. 3: eine isometrische Ansicht der Fadenspanneinrichtung entsprechend der Fig. 1 und 2,
- Fig. 4: eine zweite Ausführungsform einer erfindungsgemäßen Fadenspanneinrichtung mit einer Drehschubhülsenfeder in Ansicht von oben,
- Fig. 5: eine Schnittansicht der Ausführungsform nach Fig. 4 entlang der Schnittlinie B-B, und
- Fig. 6: eine isometrische Ansicht der Fadenspanneinrichtung entsprechend der Fig. 4 und 5.

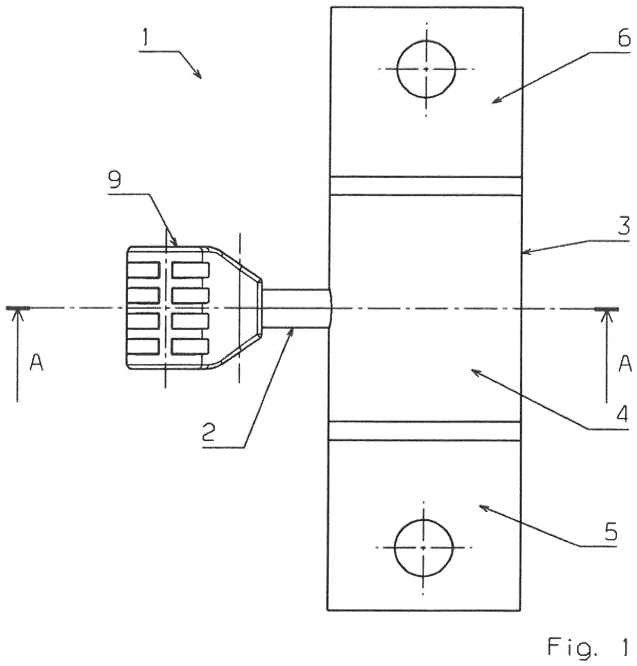

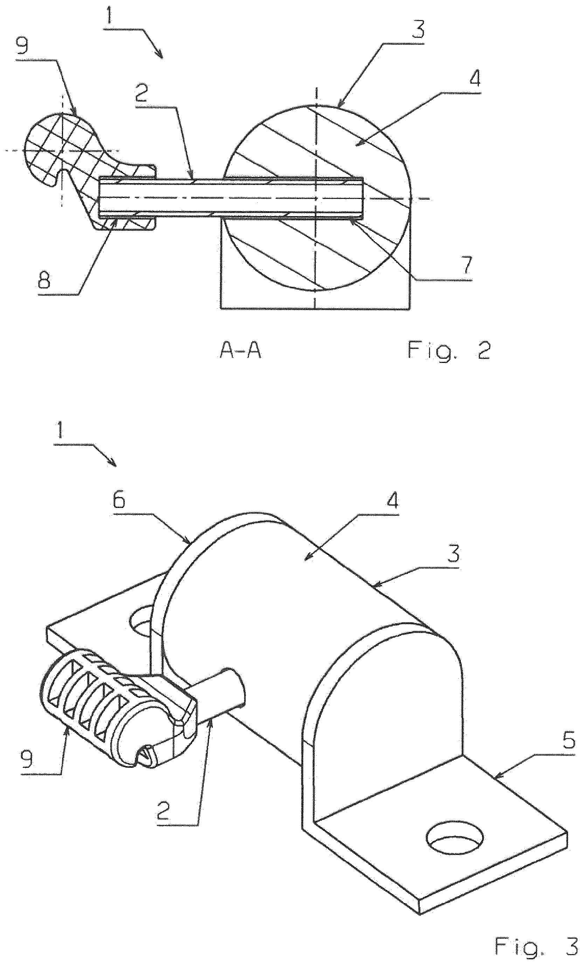

Fig. 1 bis 3 zeigen eine erste Ausführungsform einer Fadenspanneinrichtung 1 umfassend einen Hebel 2 und ein Federelement umfassend eine Drehschubfeder 3. Im vorliegenden Ausführungsbeispiel ist die Drehschubfeder 3 als Drehschub-Scheibenfeder ausgebildet. Die Drehschubfeder 3 umfasst einen zylinderförmigen elastomeren Körper 4 sowie zwei Federhalterungen 5, 6, die an beiden Stirnseiten des elastomeren Körpers 4 angeordnet sind.

Der Hebel 2 ist im vorliegenden Ausführungsbeispiel als karbonfaserverstärktes Hohlprofil ausgebildet. Das Außenprofil sowie das Innenprofil sind hier kreisförmig ausgebildet. Ein erstes Ende 7 des Hebels 2 ist mit dem elastomeren Körper 4 der Drehschubfeder 3 verbunden. Ein Abschnitt des Hebels 2 verläuft hier senkrecht zur Zylinderachse innerhalb des elastomeren Körpers über mehr als die Hälfte des Durchmessers des elastomeren Körpers.

An einem zweiten Ende 8 des Hebels 2 ist ein Anschlussstück 9 angeordnet. Das Anschlussstück 9 ist vorzugsweise aus einem möglichst leichten Kunststoff gefertigt. Die Fadenschar kann direkt am Anschlussstück 9 anliegen oder an einem am Anschlussstück 9 befestigten Umlenkteil wie beispielsweise einem Umlenkprofil.

Wird nun über eine Änderung der Fadenspannung ein Drehmoment auf das Anschlussstück 9 und den Hebel 2 ausgeübt, so kommt es zu einer elastischen Verdrehung des elastomeren Körpers 4 mit dem Hebel 2 gegenüber den ortsfesten Federhalterungen 5, 6. Die Drehschubfeder 3 erlaubt hier also eine Federung der Fadenspanneinrichtung mit einem möglichst geringen Trägheitsmoment und somit einer möglichst hohen Eigenfrequenz. Gleichzeitig erlaubt der elastomere Körper eine deutlich verbesserte Dämpfung gegenüber den im Stand der Technik verwendeten Blattfedern.

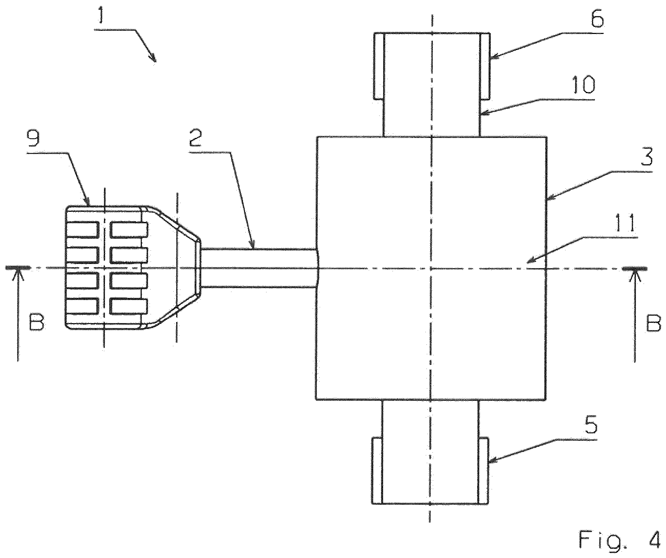

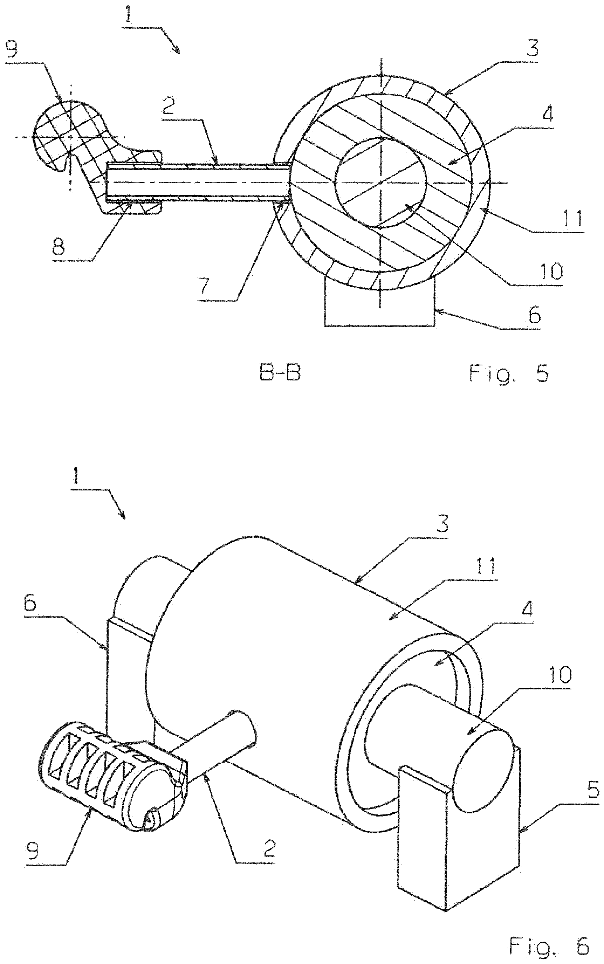

Fig. 4 bis 6 zeigen eine zweite Ausführungsform einer Fadenspanneinrichtung 1. Die Fadenspanneinrichtung 1 ist in dieser Ausführungsform als Drehschub-Hülsenfeder ausgebildet, umfassend einen Kern 10 und eine zylindrische Außenhülse 11. Zwischen dem Kern 10 und der Außenhülse 11 ist der elastomere Körper 4 angeordnet. Der elastomere Körper 4 hat hier die Form einer Zylinderhülse. Der Kern 11 ist radial innerhalb des elastomeren Körpers 4 angeordnet und ist im vorliegenden Ausführungsbeispiel ein Stab. Der Kern 10 kann jedoch auch alternativ als Innenhülse ausgebildet sein.

Der Kern 10 ist an beiden Enden mit je einer Federhalterung 5, 6 verbunden. Der Hebel 2 ist auch hier als karbonfaserverstärktes Hohlprofil ausgebildet. An einem ersten Ende 7 ist der Hebel 2 hier mit der Außenhülse 11 verbunden. Die Außenhülse 11 weist dazu eine kreisförmige radiale Bohrung auf, in die das erste Ende 7 des Hebels 2 eingreift.

An einem zweiten Ende 8 des Hebels 2 ist ein Anschlussstück 9 befestigt. Das Anschlussstück 9 erlaubt es, ein Umlenkteil wie beispielsweise ein Umlenkprofil mit dem Hebel 2 zu verbinden, bzw. je nach Ausführungsform kann das Anschlussstück 9 auch selbst ein Umlenkprofil aufweisen.

Die Verwendung einer Drehschub-Hülsenfeder entsprechend der zweiten Ausführungsform nach Fig. 4 bis 6 hat gegenüber der ersten Ausführungsform nach Fig. 1 bis 3 den Vorteil einer höheren Stabilität. Die erreichbaren Eigenfrequenzen können jedoch je nach Materialwahl des elastomeren Körpers bzw. der Außenhülse in der ersten Ausführungsform höher sein.

Eine erfindungsgemäße Kettenwirkmaschine, die eine erfindungsgemäße Fadenspanneinrichtung umfasst, kann daher mit einer höheren Arbeitsgeschwindigkeit betrieben werden, da die erfindungsgemäßen Fadenspanneinrichtungen deutlich höhere Eigenfrequenzen erlauben und gleichzeitig eine starke Dämpfung bereitstellen.

## Patentansprüche

1. Fadenspanneinrichtung (1) umfassend ein Federelement und einen Hebel (2), **dadurch gekennzeichnet, dass** das Federelement eine Drehschubfeder (3) umfasst, die mit einem Ende (7) des Hebels (2) verbunden ist, wobei der Hebel (2) ein Hohlprofil aufweist und/oder aus faserverstärktem Kunststoff besteht.

2. Fadenspanneinrichtung nach Anspruch 1, **dadurch gekennzeichnet, dass** die Drehschubfeder (3) einen elastomeren Körper (4) umfasst.

3. Fadenspanneinrichtung nach Anspruch 2, **dadurch gekennzeichnet, dass** der Hebel (2) an einem Ende (7) mit dem elastomeren Körper (4) verbunden ist.

4. Fadenspanneinrichtung nach Anspruch 3, **dadurch gekennzeichnet, dass** der Hebel (2) am anderen Ende (8) mit einem Anschlussstück (9) verbunden ist.

5. Fadenspanneinrichtung nach einem der Ansprüche 1 bis 4, **dadurch gekennzeichnet, dass** die Drehschubfeder (3) eine Drehschub-Scheibenfeder ist.

6. Fadenspanneinrichtung nach einem der Ansprüche 2 bis 5, **dadurch gekennzeichnet, dass** die Drehschubfeder einen zylindrischen elastomeren Körper aufweist, der an beiden Stirnseiten mit je einer Federhalterung (5, 6) verbunden ist.

7. Fadenspanneinrichtung nach einem der Ansprüche 1 bis 4, **dadurch gekennzeichnet, dass** die Drehschubfeder (3) eine Drehschub-Hülsenfeder ist.

8. Fadenspanneinrichtung nach Anspruch 7, **dadurch gekennzeichnet, dass** die Drehschubfeder (3) einen Kern (10) und eine zylindrische Außenhülse (11) umfasst.

9. Fadenspanneinrichtung nach Anspruch 8, **dadurch gekennzeichnet, dass** zwischen Kern (10) und Außenhülse (11) ein elastomerer Körper (4) angeordnet ist, wobei der elastomere Körper (4) die Form einer Zylinderhülse aufweist.

10. Fadenspanneinrichtung nach Anspruch 9, **dadurch gekennzeichnet, dass** der Hebel (2) an einem Ende (7) mit der Außenhülse (11) verbunden ist.

11. Fadenspanneinrichtung nach einem der Ansprüche 8 bis 10, **dadurch gekennzeichnet, dass** der Kern (10) an beiden Enden mit je einer Federhalterung (5, 6) verbunden ist.

12. Kettenwirkmaschine umfassend eine Fadenspanneinrichtung nach einem der Ansprüche 1 bis 11.

## Claims

1. Yarn tensioning device (1) comprising a spring element and a lever (2), **characterized in that** the spring element comprises a torsion thrust spring (3) which is connected to one end (7) of the lever (2), wherein the lever (2) has a hollow profile and/or the lever (2) is composed of fibre-reinforced plastics material.

2. Yarn tensioning device according to Claim 1, **characterized in that** the torsion thrust spring (3) comprises an elastomer body (4).

3. Yarn tensioning device according to Claim 2, **characterized in that** the lever (2) at one end (7) is connected to the elastomer body (4).

4. Yarn tensioning device according to Claim 3, **characterized in that** the lever (2) at the other end (8) is connected to a connector piece (9).

5. Yarn tensioning device according to one of Claims 1 to 4, **characterized in that** the torsion thrust spring (3) is a torsion thrust disc spring.

6. Yarn tensioning device according to one of Claims 2 to 5, **characterized in that** the torsion thrust spring has a cylindrical elastomer body which at both end sides in each case is connected to one spring mounting (5, 6).

7. Yarn tensioning device according to one of Claims 1 to 4, **characterized in that** the torsion thrust spring (3) is a torsion thrust sleeve spring.

8. Yarn tensioning device according to Claim 7, **characterized in that** the torsion thrust spring (3) comprises a core (10) and a cylindrical external sleeve (11).

9. Yarn tensioning device according to Claim 8, **characterized in that** an elastomer body (4) is disposed between the core (10) and the external sleeve (11), the elastomer body (4) having the shape of a cylinder sleeve.

10. Yarn tensioning device according to Claim 9, **characterized in that** the lever (2) at one end (7) is connected to the external sleeve (11).

11. Yarn tensioning device according to one of Claims 8 to 10, **characterized in that** the core (10) at both ends in each case is connected to one spring mounting (5, 6).

12. Warp-knitting machine, comprising a yarn tensioning device (1) according to one of Claims 1 to 11.

## Revendications

1. Dispositif de tension de fil (1) comprenant un élément ressort et un levier (2), **caractérisé en ce que** l'élément ressort comprend un ressort de poussée de torsion (3), qui est relié à une extrémité (7) du levier (2), dans lequel le levier (2) présente un profil creux et/ou est constitué de plastique renforcé de fibres.

2. Dispositif de tension de fil selon la revendication 1, **caractérisé en ce que** le ressort de poussée de torsion (3) comprend un corps élastomère (4).

3. Dispositif de tension de fil selon la revendication 2, **caractérisé en ce que** le levier (2) est relié à une extrémité (7) au corps élastomère (4).

4. Dispositif de tension de fil selon la revendication 3, **caractérisé en ce que** le levier (2) est relié à l'autre extrémité (8) à un raccord (9).

5. Dispositif de tension de fil selon l'une quelconque des revendications 1 à 4, **caractérisé en ce que** le ressort de poussée de torsion (3) est une clavette de poussée de torsion.

6. Dispositif de tension de fil selon l'une quelconque des revendications 2 à 5, **caractérisé en ce que** le ressort de poussée de torsion présente un corps élastomère cylindrique, qui est relié des deux côtés avant à respectivement une attache de ressort (5, 6).

7. Dispositif de tension de fil selon l'une quelconque des revendications 1 à 4, **caractérisé en ce que** le ressort de poussée de torsion (3) est un ressort à douille de poussée de torsion.

8. Dispositif de tension de fil selon la revendication 7, **caractérisé en ce que** le ressort de poussée de torsion (3) comprend un noyau (10) et une douille extérieure cylindrique (11).

9. Dispositif de tension de fil selon la revendication 8, **caractérisé en ce qu'**un corps élastomère (4) est agencé entre le noyau (10) et la douille extérieure (11), dans lequel le corps élastomère (4) présente la forme d'une douille cylindrique.

10. Dispositif de tension de fil selon la revendication 9, **caractérisé en ce que** le levier (2) est relié à une extrémité (7) à la douille extérieure (11).

11. Dispositif de tension de fil selon l'une quelconque des revendications 8 à 10, **caractérisé en ce que** le noyau (10) est relié aux deux extrémités avec respectivement une attache de ressort (5, 6).

12. Métier à tricoter chaîne comprenant un dispositif de tension de fil selon l'une quelconque des revendications 1 à 11.
